# EUROPÄISCHE PATENTSCHRIFT

(11) **EP 2 991 450 B1**
(45) Veröffentlichungstag und Bekanntmachung des Hinweises auf die Patenterteilung: **23.09.2020**
(21) Anmeldenummer: 15181321.9
(22) Anmeldetag: 18.08.2015
(51) Int. Cl.: H05B 6/64, A47J 36/02, A47J 27/04

(54) **GARSYSTEM**
COOKING SYSTEM
SYSTÈME DE CUISSON

(30) Priorität: 29.08.2014 DE 102014112423
(43) Veröffentlichungstag der Anmeldung: 02.03.2016
(73) Patentinhaber: Miele & Cie. KG, 33332 Gütersloh (DE)
(72) Erfinder: Metz, Thomas, 32257 Bünde (DE); Höhn, Rüdiger, 33120 Hiddenhausen (DE); Kaudewitz, Carolin, 33378 Rheda-Wiedenbrück (DE); Schulze, Christian, 32130 Enger (DE); Peters, Andre, 32051 Herford (DE)

(56) Entgegenhaltungen:
- EP-A1- 1 741 986
- EP-A1- 2 333 419
- WO-A2-2006/138645
- FR-A1- 2 603 096
- JP-A- 2011 021 767
- US-A- 4 560 850

## Beschreibung

Die vorliegende Erfindung betrifft ein Garsystem mit einem Gargerät und wenigstens einem Garbehälter zur Aufnahme von Gargut. Das Gargerät umfasst wenigstens eine Mikrowellenheizquelle. Das Gargerät weist wenigstens einen Garraum mit wenigstens einer Muffel und wenigstens eine an der Muffel angeordnete Trageinrichtung zur Positionierung des Garbehälters im Garraum auf.

Gargeräte weisen in der Regel eine oder mehrere Heizquellen für die Zubereitung von Speisen in einem Garraum auf. Dabei ist eine Kombination verschiedener Heizquellen oft besonders sinnvoll, da sich die Heizquellen dann in ihren Vorteilen ergänzen. So bietet z.B. eine Mikrowellenheizquelle einen sehr guten Wirkungsgrad, da die Energie der Mikrowellen sofort zur Verfügung steht und das Lebensmittel von innen her gegart wird. Dampfheizquellen ermöglichen beispielsweise eine besonders schonende Garung und verhindern das Austrocknen von Lebensmitteln beim Garen.

Die Kombination verschiedener Heizquellen stellt insbesondere bei sogenannten Kombigeräten mit einer Mikrowellenheizquelle und einer thermischen Heizquelle eine technische Herausforderung dar. Einerseits muss bei einem solchen Kombigerät der Garraum zusammen mit den verwendeten Garbehältern hitzebeständig gegenüber den zu erwartenden Temperaturen beim Betrieb der thermischen Heizquelle sein. Andererseits muss bei der Verwendung von Mikrowellenheizquellen berücksichtigt werden, dass es aufgrund der Leistungszufuhr nicht zu ungünstigen Erwärmungen und Spannungsüberschlägen kommt. Besonders bei der Gestaltung von Garbehältern für solche Kombigeräte sollte beachtet werden, dass es nicht zu Überschlägen zwischen Garbehälter und Garraum kommt. Denn solche Überschläge können den Garbehälter optisch beeinträchtigen oder gar beschädigen und auch den Garraummantel in Mitleidenschaft ziehen.

Im Stand der Technik sind daher Garbehälter bekannt geworden, welche aus Kunststoff oder Keramik gestaltet sind. So zeigt die Druckschrift US 4 560 850 A einen einfachen Garbehälter der eine Beschichtung aus einem Kunststoff aufweist oder vorzugsweise aus Kunststoff gefertigt ist. Zudem sind auch Garbehälter aus Metall bekannt geworden, bei denen die Hersteller aber eine Verwendung im Mikrowellenbetrieb untersagen. Bei gewerblichen Geräten sind metallische Garbehälter bekannt geworden, welche in einem Hordenwagen aufgenommen sind, sodass der Abstand zum Garraum sehr groß ist. Nachteilig daran ist der sehr hohe Platzbedarf, sodass solche Lösungen bei den engen Abmessungen eines Haushaltsgerätes nicht in Betracht kommen.

Die Druckschrift FR 2 603 096 A1 zeigt ein Garsystem mit einem Gargerät, welches eine Muffel aufweist, an deren Wänden Trageinrichtungen zur Aufnahme eines Garbehälters vorgesehen sind. Ein Garbehälter zur Aufnahme an einem solchen Tragsystem zeigt beispielsweise die Druckschrift EP 2 333 419 A1 mit einer Grillpfanne. Einen Garbehälter zur Aufnahme an einem solchen Tragsystem der für den Einsatz in Dampfgargeräten optimiert ist wird in der Druckschrift EP 1 741 986 A1 beschrieben.

Ein Gargerät mit einer Mikrowellenheizquelle, einem Garraum aus Metall und einem Garbehälter aus Metall ist aus der Druckschrift JP 2011 021767 A bekannt. Das Gargerät ist mit Bremsstopfen ausgestattet, welche die Bewegung des Garbehälters in dem Garraum begrenzen und so einen vorbestimmten Abstand zu der Garraumwand sicherstellen. Hierdurch wird erreicht, dass Funkenüberschläge zwischen Garbehälter und Garraumwand verhindert werden können.

Es ist daher die Aufgabe der vorliegenden Erfindung ein Gargerät und einen Garbehälter zur Verfügung zu stellen, die eine verbesserte Eignung für einen Mikrowellenbetrieb und insbesondere für einen Kombibetrieb mit einer Mikrowellenheizquelle und einer thermischen Heizquelle aufweisen.

Diese Aufgabe wird durch ein Garsystem mit den Merkmalen des Anspruchs 1 gelöst. Einige Vorteile und Merkmale der vorliegenden Erfindung ergeben sich aus den Unteransprüchen. Weitere Vorteile und Merkmale sind in der allgemeinen Beschreibung und der Beschreibung des Ausführungsbeispiels angegeben.

Das erfindungsgemäße Garsystem umfasst wenigstens ein Gargerät und wenigstens einen Garbehälter zur Aufnahme von Gargut. Das Gargerät weist wenigstens eine Mikrowellenheizquelle und wenigstens einen Garraum mit wenigstens einer Muffel auf. An der Muffel ist wenigstens eine Trageinrichtung zur Positionierung des Garbehälters im Garraum vorgesehen. Der Garbehälter umfasst wenigstens einen Boden und wenigstens 4 quer zum Boden angeordnete Seitenwände. Es ist möglich, dass wenigstens eine Seitenwand wenigstens teilweise durch eine Tür gebildet wird. Die Seitenwände umfassen wenigstens zwei gegenüberliegende Längsseiten und wenigstens zwei gegenüberliegende Breitseiten. Dabei weist der Garbehälter an Übergängen von der Breitseite zur Längsseite wenigstens 4 Ecken auf. Die Ecken sind dabei zur Einhaltung eines Mindestabstandes zur Muffel mit jeweils wenigstens einer Abrundung ausgebildet. Die Abrundung weist dabei wenigstens einen Außenradius von wenigstens 30 mm auf. Hierdurch wird elektrischen Überschlägen zwischen Garbehälter und Garraum entgegengewirkt und die Eignung von Gargerät und/oder Garbehälter für einen Mikrowellenbetrieb verbessert. Das erfindungsgemäße Garsystem hat viele Vorteile. Ein erheblicher Vorteil ist, dass wenigstens ein Gargerät und wenigstens ein Garbehälter vorgesehen sind, wobei der Garbehälter Abrundungen mit einem Außenradius von wenigstens 30 mm aufweist. Durch einen solchen Mindestradius wird gewährleistet, dass immer ein ausreichender Mindestabstand zwischen dem Garbehälter und dem Garraum eingehalten werden kann. Kleinere Radien würden dabei dazu führen, dass die Ecken des Garbehälters dem Garraum so nahe kommen, sodass Spannungsüberschläge auftreten können. Dadurch kann der erfindungsgemäße Garbehälter problemlos aus einem metallischen Material gestaltet werden, ohne dass im Regelbetrieb Spannungsüberschläge bei einem Mikrowellenbetrieb auftreten.

Ein weiterer Vorteil des Garsystems ist, dass der zur Verfügung stehende Garraum optimal genutzt werden kann. Da durch die abgerundeten Ecken Spannungsüberschläge bereits zuverlässig vermieden werden, kann eine entsprechend enge Aufnahme des Garbehälters im Garraum erfolgen. Durch eine solche optimale Raumausnutzung ist das Garsystem besonders vorteilhaft im Haushaltsbereich einsetzbar.

Das Abrunden der Ecken bietet dabei auch hygienische Vorteile, da solche Garbehälter auch sehr unkompliziert gereinigt und sauber gehalten werden können. Das ist beispielsweise gegenüber Garbehältern aus dem Stand der Technik vorteilhaft, welche den Behälterrand in aufwändiger Weise einrollen, um Überschläge zu vermeiden. Solche eingerollten Bereiche sind aber in der Regel sehr schwer sauber zu halten. Zudem können solche die erfindungsgemäß vorgesehenen Abrundungen mit dem entsprechenden Radius in der Herstellung unaufwändig umgesetzt und somit kostengünstig hergestellt werden.

Die Abrundung weist dabei wenigstens einen Außenradius von wenigstens 30 mm auf, um elektrischen Überschlägen zwischen Garbehälter und Garraum entgegen zu wirken.

In einer bevorzugten Weiterbildung beträgt der Außenradius der Abrundung wenigstens 35 mm. Mit einem solchen Radius kann das Auftreten von elektrischen Überschlägen noch wirkungsvoller verhindert werden.

In einer anderen bevorzugten Weiterbildung beträgt der Mindestabstand zwischen Garbehälter und Muffel wenigstens 8 mm. Besonders bevorzugt beträgt der Mindestabstand wenigstens 10 mm. Ein solcher Mindestabstand gewährleistet einen zuverlässigen Überschlagsschutz und bietet zugleich eine optimale Raumausnutzung für den Garbehälter im Garraum. Dabei ist insbesondere vorgesehen, dass der Mindestabstand unabhängig von der Positionierung des Garbehälters an der Trageinrichtung eingehalten wird. Insbesondere ist dabei der Außenradius der Abrundung auf den erforderlichen Mindestabstand abgestimmt. Beispielsweise kann ein Mindestabstand von wenigstens 10 mm besonders gut bei einer Abrundung mit einem Außenradius von mehr als 35 mm erreicht werden. Insbesondere wird der Mindestabstand auch dann eingehalten, wenn der Garbehälter in einer verkanteten und/oder leicht schrägen Stellung an der Trageinrichtung angeordnet ist.

Vorzugsweise sind die Abrundungen an wenigstens einem Behälterrand ausgebildet. Der Behälterrand ist dabei insbesondere an wenigstens einer Seitenwand angeordnet. Insbesondere umfasst der Behälterrand wenigstens einen nach außen von der Breitseite abstehenden Stirnrand. Der Behälterrand kann auch wenigstens einen nach außen von der Längsseite abstehenden Seitenrand umfassen. Ein solcher Behälterrand kann besonders gut zur Führung des Garbehälters in der Trageinrichtung dienen. Die dabei an dem Behälterrand ausgebildeten Abrundungen verhindern zuverlässig eine Unterschreitung des Mindestabstands zur Muffel insbesondere sogar auch dann, wenn der Garbehälter wenigstens etwas verkantet geführt wird. Insbesondere umfasst der Behälterrand wenigstens einen quer zur Breitseite angeordneten Stirnrand und/oder wenigstens einen quer zur Längsseite angeordneten Seitenrand. Der Stirnrand und/oder der Seitenrand erstrecken sich vorzugsweise im Wesentlichen parallel zum Boden des Garbehälters. Der Stirnrand ist insbesondere schmaler als 20 mm ausgebildet. Vorzugsweise ist der Stirnrand schmaler als 12 mm ausgebildet. Insbesondere ist der Stirnrand bereiter als 3 mm und vorzugsweise breiter als 5 mm ausgebildet. Möglich ist auch, dass gar kein Stirnrand vorgesehen ist. Durch solche Ausgestaltungen kann das Volumen des Garraums optimal ausgenutzt werden. Zudem wird dadurch der für das Gargut vorgesehene Bereich des Garbehälters nicht unnötig eingeschränkt. In einer vorteilhaften Weiterbildung weist die Trageinrichtung wenigstens einen horizontal verlaufenden Stab auf. Insbesondere sind wenigstens zwei Stäbe vorgesehen. Die Stäbe sind dabei insbesondere auf gleicher Höhe an gegenüberliegenden Seiten der Muffel angeordnet. Möglich ist auch, dass auf unterschiedlichen Höhen im Garraum jeweils zwei sich gegenüberliegende Stäbe vorgesehen sind. Dabei charakterisieren jeweils zwei Stäbe eine Einschubposition für den Garbehälter. Der Stab ist insbesondere dazu geeignet und ausgebildet, als Führung für den Seitenrand zu dienen. Dabei liegt der Seitenrand insbesondere wenigstens teilweise auf den Stab auf. Der Stab weist insbesondere einen Durchmesser von wenigstens 3 mm und vorzugsweise von wenigstens 4 mm auf. Durch einen solchen Durchmesser kann ein Durchbiegen der Stäbe auch bei schwerbeladenen Garbehältern zuverlässig vermieden werden.

Besonders bevorzugt beträgt ein Spiel zwischen dem Stab und wenigstens einer der Längsseiten maximal 4 mm. Bevorzugt beträgt das Spiel maximal 2,5 mm. Durch ein solches geringes Spiel wird ein Verkanten des Garbehälters in der Trageinrichtung wirkungsvoll verhindert. Zudem wird durch das geringe Spiel ein Unterschreiten des Mindestabstandes verhindert.

Es ist möglich, dass die Trageinrichtung wenigstens einen Anschlag für die Abrundung aufweist. Dabei ist der Anschlag insbesondere dazu geeignet und ausgebildet, eine Einschubtiefe des Garbehälters in den Garraum zu begrenzen. Der Anschlag kann dabei auch für eine Seitenwand und/oder den Behälterrand vorgesehen sein. Beispielsweise ist der Anschlag als Querstrebe ausgebildet. Die Querstrebe verläuft dabei insbesondere quer zu wenigstens einem Stab, der zur Führung des Seitenrandes des Garbehälters vorgesehen ist. Ein solcher Anschlag verhindert wirkungsvoll das der Garbehälter mit einer Breitseite gegen die hintere Garraumwand stößt, wobei Überschläge auftreten können.

Vorzugsweise weisen die Seitenwände eine Höhe von wenigstens 30 mm auf. Besonders bevorzugt beträgt die Höhe der Seitenwände wenigstens 40 mm.

Erfindungsgemäß weisen die Ecken jeweils wenigstens eine Abrundung mit einem Innenradius von maximal 30 mm auf. Der Innenradius beträgt bevorzugt weniger als 24 mm. Durch die Berücksichtigung solcher Maße für den Innenradius kann dem Auftreten von Spannungsspitzen zuverlässig entgegengewirkt werden.

Es ist bevorzugt, dass der Garbehälter eine Breite aufweist, welche maximal das 3-fache einer Tiefe beträgt. Die Breite erstreckt sich dabei entlang der Breitseite und die Tiefe entlang der Längsseite. Insbesondere stehen Breite und Tiefe dabei in einem Verhältnis von etwa 2 : 1. Beispielsweise beträgt die Breite des Garbehälters 325 mm und die Tiefe 170 mm. Ein solches Verhältnis von Breite zu Tiefe verhindert wirkungsvoll ein Durchbiegen der Stäbe der Trageinrichtung auch bei sehr beladenen Garbehältern.

Vorzugsweise ist die Trageinrichtung elektrisch isoliert an der Muffel angeordnet. Insbesondere ist dabei zwischen einem Stab und der Muffel wenigstens ein Isolierkörper vorgesehen. Beispielsweise ist der Stab in eine Ausnehmung der Muffel eingesteckt, wobei der Stab dabei von einer isolierenden Hülse umgeben ist. Durch eine isolierende Aufnahme werden Spannungsspitzen vermieden. Möglich ist aber auch, dass die Trageinrichtung mit der Muffel elektrisch kontaktiert ist.

In einer besonders bevorzugten Ausgestaltung ist das Gargerät als ein Kombigerät mit einer Dampfgarfunktion und einer Mikrowellengarfunktion ausgebildet. Dazu sind wenigstens eine Dampfheizquelle und wenigstens eine Mikrowellenheizquelle vorgesehen. Bei einem solchen Kombigerät können die Vorteile des zuvor beschriebenen Garbehälters besonders gut genutzt werden. Einerseits eignet sich der Garbehälter in einer metallischen Ausführung besonders gut zur Aufnahme von Gargut während eines Dampfgarprozesses und zum anderen kann er im Mikrowellenbetrieb eingesetzt werden, ohne Spannungsüberschläge befürchten zu müssen.

In den Figuren zeigen:
- Figur 1: eine schematische perspektivische Ansicht des Garsystems 100;
- Figur 2: eine schematische Draufsicht auf einen Garbehälter des Garsystems nach Fig 1;
- Figur 3: einen Längsschnitt des Garbehälters nach Fig. 2;
- Figur 4: einen Querschnitt des Garbehälters nach Fig. 2;
- Figur 5: eine perspektivische Ansicht des Garbehälters nach Fig. 2;
- Figur 6: einen vergrößerten Außenschnitt eines Garbehälters in einem Garraum; und
- Figur 7: den Außenschnitt nach Fig. 6 mit einem verkantet eingesetzten Garbehälter.

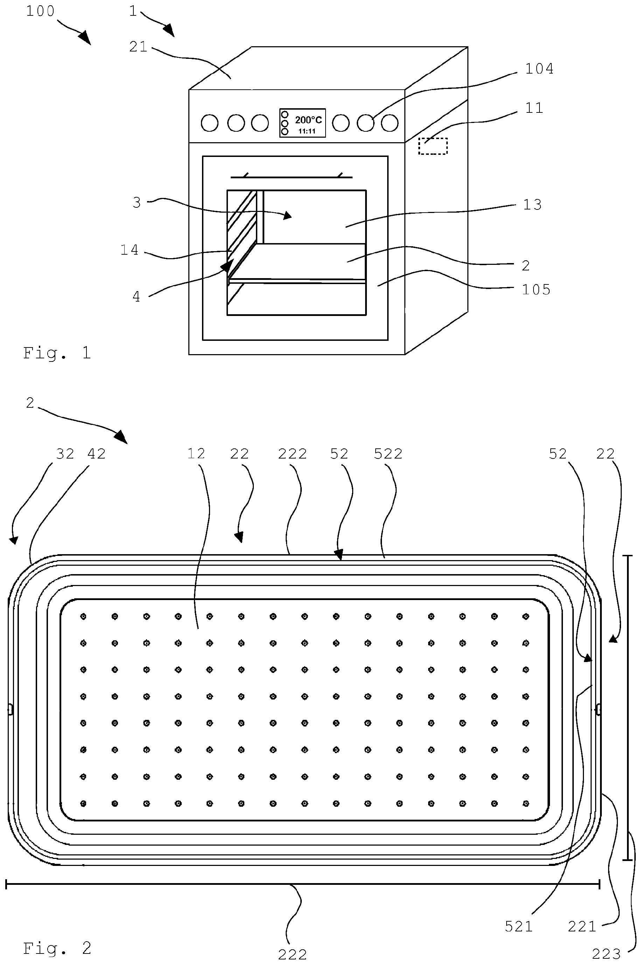

In der Figur 1 ist ein erfindungsgemäßes Garsystem 100 mit einem Gargerät 1 und einem in einem Garraum 3 des Gargerätes 1 aufgenommenem Garbehälter 2 dargestellt. Das Gargerät 1 kann von einem Benutzer über eine Bedieneinrichtung 104 bedient werden und hat einen Garraum 3 zur Behandlung von Gargut. Der Garraum 3 kann mittels einer Tür 105 verschlossen werden. Zum Erwärmen, bzw. Erhitzen des Garguts weist das Gargerät 1 hier eine Mikrowellenheizquelle 11 und einen schematisch dargestellten Dampferzeuger 10 auf. Weitere thermische Heizquellen können vorgesehen sein, wie z. B. Ober- und Unterhitzeheizkörper oder eine Umluftheizquelle. Dabei können verschiedenen Heizquellen einzeln oder auch in beliebiger Kombination betrieben werden. Das Gargerät 1 kann sowohl als Einbaugerät als auch als alleistehendes Gargerät 1 ausgebildet sein. Hier ist das Gargerät 1 als ein Kombigerät 21 ausgeführt.

Der Garraum 3 ist hier von einer Muffel 13 umgeben, welche zusammen mit der Tür 105 ein Austreten von Mikrowellen und im Wesentlichen auch von Dampf verhindert. Die Tür 105 kann durch einen Türöffner geöffnet werden. Es ist wenigstens eine Sicherheitseinrichtung vorgesehen, welche einen Mikrowellenbetrieb bei nicht korrekt verschlossener Tür 105 verhindert.

An der Muffel 13 ist zur Positionierung des Garbehälters 2 sowie auch anderer Gargutträger wie z. B. Backblechen oder Gitterrosten, eine Trageinrichtung 4 angeordnet. Die Trageinrichtung 4 besteht hieraus zwei an gegenüberliegenden Seitenflächen der Muffel 13 befestigten Traggittern. Das Traggitter besteht dabei aus mehreren Stäben, welche in Längs- bzw. in Querrichtung angeordnet und miteinander verbunden sind. Dabei können entlang der Längsstäbe ein oder mehrere Garbehälter 2 in verschiedenen Höhenpositionen eingeschoben werden.

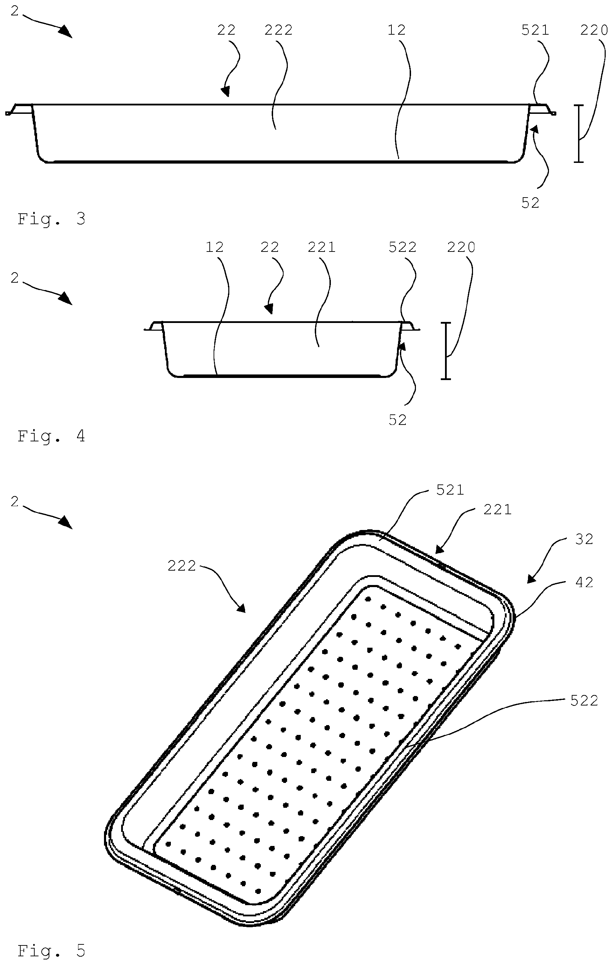

Der Garbehälter 2 ist in einer beispielhaften Ausführung in Figur 2 in einer Draufsicht und in den Figuren 3 und 4 in einer längs- bzw. quergeschnittenen Seitenansicht dargestellt. Die Figur 5 zeigt den Garbehälter 2 in einer perspektivischen Darstellung.

Der Garbehälter 2 weist einen Boden 12 mit einer Vielzahl von Löchern zur Verbesserung des Dampfdurchlasses auf. Quer zum Boden 12 sind insgesamt 4 miteinander verbundene Seitenwände 22 angeordnet. Die Seitenwände 22 sind in einem Winkel etwas größer 90° zum Boden 12 angeordnet, um ein Gargut leichter aus dem Garbehälter 2 entnehmen zu können. Jeweils zwei gegenüberliegende Seitenwände 22 sind als Breitseiten 222 und als Längsseiten 221 ausgebildet. Die Breitseite erstreckt sich über eine Breite 224, welche hier beispielhaft 375 mm beträgt. Entlang der Längsseiten 221 ergibt sich eine Tiefe 223, welche hier beispielhaft 197 mm beträgt.

Entlang der Seitenwände verläuft ein den Garbehälter 2 umgebender Behälterrand 52. Der Behälterrand 52 ist an der Breitseite 222 als ein nach außen abstehender Stirnrand 522 ausgebildet. Entlang der Längsseite 221 ist ein nach außen abstehender Seitenrand 521 angeordnet. Der Seitenrand 521 und der Stirnrand 522 sind z. B. 10 mm breit.

Zur Gewährleistung eines Mindestabstandes zwischen Garbehälter 2 und Muffel 13 weist der Garbehälter 2 hier Ecken 32 auf, welche mit Abrundungen 42 versehen sind. Die Abrundungen 42 weisen dabei einen Außenradius von mindestens 30 mm auf. Die Seitenwände 22 weisen eine Höhe 220 von 40 mm auf. An den Ecken 32 sind Innenradien von max. 24 mm. vorgesehen. Durch einen derart ausgestalteten Innenradius der Behälterecken 32 kann eine genaue und stabile Führung des Garbehälters 2 in der Trageinrichtung 4 gewährleistet werden. Zudem werden Ecken vermieden, welche von sich aus ungünstige Spannungsüberhöhungen im Mikrowellenbetrieb verursachen können.

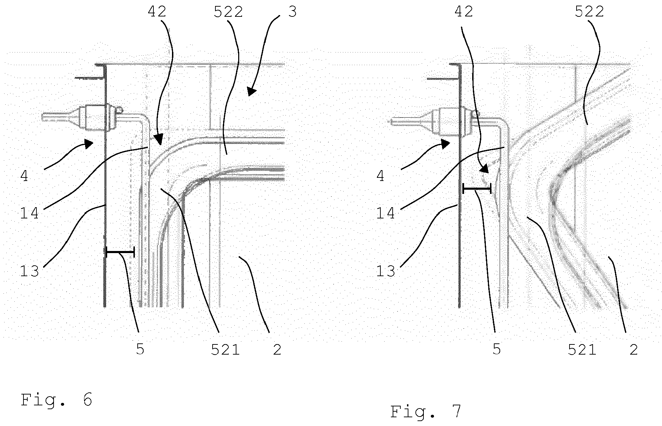

Figur 6 zeigt ausschnittsweise eine Draufsicht auf ein Detail eines Garbehälters 2, welcher in einem Garraum 3 an einer Trageinrichtung 4 aufgenommen ist. Die Trageinrichtung 4 umfasst einen Stab 14, auf dem der eingeschobene Garbehälter 2 aufliegt. Der Stab 14 ist elektrisch isoliert in einer Ausnehmung einer Muffel 13 des Garraumes 3 befestigt. Zwischen dem Garbehälter 2 und der Muffel 13 ist hier ein beispielhafter Mindestabstand von 15 mm eingehalten, sodass im Mikrowellenbetrieb keine elektrischen Überschläge auftreten.

Die Figur 7 zeigt den Garbehälter 2 der Figur 6 in einer verkanteten Stellung. Aufgrund der Abrundung mit einem Außenradius von hier z.B. 40 mm wird auch in dieser verkanteten Position zum Schutz vor Überschlägen der erforderliche Mindestabstand 5 nicht unterschritten. Dabei liegt der Seitenrand 521 des Garbehälters 2 auf dem Stab 14 auf.

Das hier vorgestellte Garsystem 100 ermöglicht die Verwendung von metallischen Garbehältern 2 und insbesondere von Edelstahlgarbehältern im Mikrowellenbetrieb bei niedrigen Kosten und hygienischer Unbedenklichkeit sowie mit einer großen Belegfläche.

Dabei gewährleistet die Konstruktion des Garbehälters 2, dass immer ein Mindestabstand 5 zwischen Garbehälter 2 und Garraum 3 eingehalten wird. Erreicht wird das insbesondere durch das Abrunden der Garbehälterecken 32 sowie durch das Verhältnis von Tiefe 223 zur Breite 224. Im Zusammenspiel Garbehälter 2 und Garraum 3 wird zudem eine genaue und stabile Führung des Garbehälters 2 dadurch gewährleistet, dass ein enges Spiel zwischen Garbehälter 2 und Trageinrichtung 4 vorliegt, der Garbehälter 2 kleine Innenradien aufweist und die Stäbe 14 der Trageinrichtung 4 einen ausreichend großen Durchmesser aufweisen.

### Bezugszeichenliste

- 1: Gargerät
- 2: Garbehälter
- 3: Garraum
- 4: Trageinrichtung
- 5: Mindestabstand
- 11: Mikrowellenheizquelle
- 12: Boden
- 13: Muffel
- 14: Stab
- 21: Kombigerät
- 22: Seitenwand
- 32: Ecke
- 42: Abrundung
- 52: Behälterrand
- 100: Garsystem
- 220: Höhe
- 221: Längsseite
- 222: Breitseite
- 223: Tiefe
- 224: Breite
- 521: Seitenrand
- 522: Stirnrand

## Patentansprüche

1. Garsystem (100)
mit wenigstens einem wenigstens eine Mikrowellenheizquelle (11) umfassenden
Gargerät (1) und mit wenigstens einem Garbehälter (2) zur Aufnahme von
Gargut (200),
wobei das Gargerät (1) wenigstens einen Garraum (3) mit wenigstens einer Muffel (13) und wenigstens eine an der Muffel (13) angeordnete Trageinrichtung (4) zur
Positionierung des Garbehälters (2) im Garraum (3) umfasst
und wobei der Garbehälter (2) wenigstens einen Boden (12) und wenigstens vier quer zum Boden (12) angeordnete Seitenwände (22), umfassend wenigstens zwei
gegenüberliegende Längsseiten (221) und wenigstens zwei gegenüberliegende
Breitseiten (222), und an Übergängen von der Breitseite (222) zur Längsseite (221) wenigstens vier Ecken (32) und wenigstens einen, an einer Seitenwand (22)
angeordneten, Behälterrand (52), mit wenigstens einem nach außen von der
Längsseite (221) abstehenden Seitenrand (521), aufweist,
und wobei die Trageinrichtung (4) wenigstens zwei horizontal verlaufende Stäbe (14) aufweist, die auf gleicher Höhe an gegenüberliegenden Seitenwänden der Muffel (13) angeordnet sind und jeder der Stäbe (14) dazu geeignet und ausgebildet sind, als
Führung für einen Seitenrand (521) zu dienen, wobei der Seitenrand (521) wenigstens teilweise auf dem jeweiligen Stab (14) aufliegt,
wobei an den Seitenwänden (22) die Ecken (32) wenigstens eine Abrundung aufweisen und am Behälterrand (52) die Ecken (32) jeweils wenigstens eine Abrundung (42) aufweisen,
der Garbehälter (2) aus einem metallischen Material gestaltet ist
**dadurch gekennzeichnet, dass** zur Einhaltung eines Mindestabstands (5) des Garbehälters (2) zur Muffel (13) an den Seitenwänden (22) die Ecken (32) wenigstens eine Abrundung mit einem Innenradius von maximal 30 mm aufweisen und am Behälterrand (52) die Ecken (32) jeweils wenigstens eine Abrundung (42) mit einem Außenradius von wenigstens 30 mm aufweisen.

2. Garsystem (100) nach dem vorhergehenden Anspruch, **dadurch gekennzeichnet, dass** der Außenradius der Abrundung (42) wenigstens 35 mm aufweist.

3. Garsystem (100) nach einem der vorhergehenden Ansprüche, **dadurch gekennzeichnet, dass** der Innenradius weniger als 24 mm beträgt.

4. Garsystem (100) nach einem der vorhergehenden Ansprüche, **dadurch gekennzeichnet, dass** ein Spiel zwischen einem Stab (14) und wenigstens einer der Längsseiten (221) maximal 4 mm beträgt.

5. Garsystem (100) nach einem der vorhergehenden Ansprüche, **dadurch gekennzeichnet, dass** der Mindestabstand (5) zwischen Garbehälter (2) und Muffel (13) wenigstens 8 mm beträgt.

6. Garsystem (100) nach einem der vorhergehenden Ansprüche, **dadurch gekennzeichnet, dass** der Behälterrand (52) wenigstens einen nach außen von der Breitseite (222) abstehenden Stirnrand (522) umfasst.

7. Garsystem (100) nach dem vorhergehenden Anspruch, **dadurch gekennzeichnet, dass** der Stirnrand (522) schmaler als 20 mm ist.

8. Garsystem (100) nach einem der vorhergehenden Ansprüche, **dadurch gekennzeichnet, dass** die Trageinrichtung (4) wenigstens einen Anschlag für die Abrundung (42) aufweist, welcher dazu geeignet und ausgebildet ist, eine Einschubtiefe des Garbehälters (2) in den Garraum (3) zu begrenzen.

9. Garsystem (100) nach einem der vorhergehenden Ansprüche, **dadurch gekennzeichnet, dass** die Seitenwände (22) eine Höhe (220) von wenigstens 30 mm aufweisen.

10. Garsystem (100) nach einem der vorhergehenden Ansprüche, **dadurch gekennzeichnet, dass** der Garbehälter (2) entlang der Längsseite (221) eine Tiefe (223) und entlang der Breitseite (222) eine Breite (224) aufweist, wobei die Breite (224) maximal das Dreifache der Tiefe (223) beträgt.

11. Garsystem (100) nach einem der vorhergehenden Ansprüche, **dadurch gekennzeichnet, dass** die Trageinrichtung (4) elektrisch isoliert an der Muffel (13) angeordnet ist.

12. Garsystem (100) nach einem der vorhergehenden Ansprüche, **dadurch gekennzeichnet, dass** das Gargerät (1) als ein Kombigerät (21) mit Dampfgarfunktion und Mikrowellengarfunktion ausgebildet ist.

## Claims

1. Cooking system (100) comprising at least one cooking appliance (1) that has at least one microwave heat source (11), and comprising at least one cooking container (2) for receiving food (200), the cooking appliance (1) comprising at least one cooking chamber (3) that has at least one muffle (13) and at least one support device (4) arranged on the muffle (13) for positioning the cooking container (2) in the cooking chamber (3), and the cooking container (2) having at least one base (12), at least four side walls (22) arranged transversely to the base (12) and comprising at least two opposing longitudinal sides (221) and at least two opposing broad sides (222) and, at transitions from the broad side (222) to the longitudinal side (221), at least four corners (32) and at least one container edge (52) arranged on one side wall (22) and comprising at least one side edge (521) projecting outwards from the longitudinal side (221), and the support device (4) having at least two horizontally extending rods (14), which are arranged at the same height on opposing side walls of the muffle (13), and each of the rods (14) being suitable and designed for being used as a guide for a side edge (521), the side edge (521) resting against the relevant rod (14) at least in part, the corners (32) having on the side walls (22) at least one rounded portion and the corners (32) each having on the container edge (52) at least one rounded portion (42), the cooking container (2) being made of a metal material, **characterised in that**, in order to maintain a minimum spacing (5) between the cooking container (2) and the muffle (13), the corners (32) have on the side walls (22) at least one rounded portion having an internal radius of at most 30 mm and the corners (32) each have on the container edge (52) at least one rounded portion (42) having an external radius of at least 30 mm.

2. Cooking system (100) according to the preceding claim, **characterised in that** the external radius of the rounded portion (42) is at least 35 mm.

3. Cooking system (100) according to either of the preceding claims, **characterised in that** the internal radius is less than 24 mm.

4. Cooking system (100) according to any of the preceding claims, **characterised in that** a clearance between one rod (14) and at least one of the longitudinal sides (221) is at most 4 mm.

5. Cooking system (100) according to any of the preceding claims, **characterised in that** the minimum spacing (5) between the cooking container (2) and the muffle (13) is at least 8 mm.

6. Cooking system (100) according to any of the preceding claims, **characterised in that** the container edge (52) comprises at least one end edge (522) projecting outwards from the broad side (222).

7. Cooking system (100) according to the preceding claim, **characterised in that** the end edge (522) is narrower than 20 mm.

8. Cooking system (100) according to any of the preceding claims, **characterised in that** the support device (4) has at least one stop for the rounded portion (42), which stop is suitable and designed for limiting an insertion depth of the cooking container (2) in the cooking chamber (3).

9. Cooking system (100) according to any of the preceding claims, **characterised in that** the side walls (22) have a height (220) of at least 30 mm.

10. Cooking system (100) according to any of the preceding claims, **characterised in that** the cooking container (2) has a depth (223) along the longitudinal side (221) and a width (224) along the broad side (222), the width (224) being at most three times the depth (223).

11. Cooking system (100) according to any of the preceding claims, **characterised in that** the support device (4) is arranged on the muffle (13) in an electrically insulated manner.

12. Cooking system (100) according to any of the preceding claims, **characterised in that** the cooking appliance (1) is designed as a combined appliance (21) having a steam cooking function and a microwave cooking function.

## Revendications

1. Système de cuisson (100)
comportant au moins un appareil de cuisson (1) comprenant au moins une source de chauffage à micro-ondes (11) et comportant au moins un récipient de cuisson (2) destiné à recevoir un aliment à cuire (200),
l'appareil de cuisson (1) comprenant au moins un espace de cuisson (3) comportant au moins un moufle (13) et au moins un dispositif de support (4) disposé sur le moufle (13) pour positionner le récipient de cuisson (2) dans l'espace de cuisson (3),
et le récipient de cuisson (2) présentant au moins une base (12) et au moins quatre parois latérales (22) disposées transversalement à la base (12), comprenant au moins deux côtés longs opposés (221) et au moins deux côtés larges opposés (222), et au moins quatre coins (32) au niveau de jonctions entre le côté large (222) et le côté long (221), et au moins un bord de récipient (52) disposé sur une paroi latérale (22), comportant au moins un bord latéral (521) faisant saillie vers l'extérieur à partir du côté long (221),
et le dispositif de support (4) présentant au moins deux barres (14) s'étendant horizontalement, lesquelles barres sont disposées à la même hauteur sur des parois latérales opposées du moufle (13), et chacune des barres (14) étant appropriée et conçue pour servir de guide pour un bord latéral (521), le bord latéral (521) reposant au moins partiellement contre la barre respective (14),
les coins (32) présentant au moins un arrondi sur les parois latérales (22) et les coins (32) présentant respectivement au moins un arrondi (42) sur le bord de récipient (52), le récipient de cuisson (2) étant constitué d'un matériau métallique,
**caractérisé en ce que**,
afin de maintenir une distance minimale (5) entre le récipient de cuisson (2) et le moufle (13) sur les parois latérales (22), les coins (32) présentent au moins un arrondi comportant un rayon intérieur d'au plus 30 mm, et que, sur le bord de récipient (52), les coins (32) présentent respectivement au moins un arrondi (42) comportant un rayon extérieur d'au moins 30 mm.

2. Système de cuisson (100) selon la revendication précédente, **caractérisé en ce que** le rayon extérieur de l'arrondi (42) est d'au moins 35 mm.

3. Système de cuisson (100) selon l'une des revendications précédentes, **caractérisé en ce que** le rayon intérieur est inférieur à 24 mm.

4. Système de cuisson (100) selon l'une des revendications précédentes, **caractérisé en ce qu'**un jeu entre une barre (14) et au moins l'un des côtés longs (221) est d'au plus 4 mm.

5. Système de cuisson (100) selon l'une des revendications précédentes, **caractérisé en ce que** la distance minimale (5) entre le récipient de cuisson (2) et le moufle (13) est d'au moins 8 mm.

6. Système de cuisson (100) selon l'une des revendications précédentes, **caractérisé en ce que** le bord de récipient (52) comprend au moins un bord frontal (522) faisant saillie vers l'extérieur à partir du côté large (222).

7. Système de cuisson (100) selon la revendication précédente, **caractérisé en ce que** le bord frontal (522) est d'une largeur inférieure à 20 mm.

8. Système de cuisson (100) selon l'une des revendications précédentes, **caractérisé en ce que** le dispositif de support (4) présente au moins une butée pour l'arrondi (42), laquelle butée est appropriée et conçue pour limiter une profondeur d'insertion du récipient de cuisson (2) dans l'espace de cuisson (3).

9. Système de cuisson (100) selon l'une des revendications précédentes, **caractérisé en ce que** les parois latérales (22) présentent une hauteur (220) d'au moins 30 mm.

10. Système de cuisson (100) selon l'une des revendications précédentes, **caractérisé en ce que** le récipient de cuisson (2) présente une profondeur (223) le long du côté long (221) et une largeur (224) le long du côté large (222), la largeur (224) étant au plus trois fois plus élevée que la profondeur (223).

11. Système de cuisson (100) selon l'une des revendications précédentes, **caractérisé en ce que** le dispositif de support (4) est disposé sur le moufle (13) de manière électriquement isolée.

12. Système de cuisson (100) selon l'une des revendications précédentes, **caractérisé en ce que** l'appareil de cuisson (1) est conçu comme un appareil combiné (21) comportant une fonction de cuisson à la vapeur et une fonction de cuisson à micro-ondes.
